# EUROPÄISCHE PATENTANMELDUNG

(11) **EP 3 763 484 A1**
(43) Veröffentlichungstag der Anmeldung: **13.01.2021**
(21) Anmeldenummer: 19185763.0
(22) Anmeldetag: 11.07.2019
(51) Int. Cl.: B25D 17/08, B25D 17/06, B25D 17/20, B23B 31/00, B23D 51/02

(54) **DICHTLIPPE AN WERKZEUGAUFNAHME**

(71) Anmelder: Hilti Aktiengesellschaft, 9494 Schaan (LI)
(72) Erfinder: Hauptmann, Udo, 86899 Landsberg (DE); Mandel, Ulrich, 86807 Buchloe Honsolgen (DE)
(74) Vertreter: Hilti Aktiengesellschaft Corporate Intellectual Property

(57) **Zusammenfassung**

Werkzeugaufnahmevorrichtung für eine Werkzeugmaschine, insbesondere ein Meißelhammer, enthaltend eine Halteeinrichtung zum Aufnehmen und Halten eines Werkzeugschafts, ein wenigstens abschnittsweise um die Halteeinrichtung umlaufendes Rückhalteelement sowie eine Staubschutzeinrichtung zum Verhindern des Eindringens von Staub in die Werkzeugaufnahmevorrichtung: Die Staubschutzeinrichtung enthält wenigstens ein erstes Staubabstreifelement, wenigstens eine Fixierwulst und wenigstens ein Dichtlippenelement enthält, wobei das Dichtlippenelement in axialer Richtung vor dem Rückhalteelement positioniert ist.

Staubschutzeinrichtung zur Verwendung in einer Werkzeugaufnahmevorrichtung.

## Beschreibung

Die vorliegende Erfindung betrifft eine Werkzeugaufnahmevorrichtung für eine Werkzeugmaschine, insbesondere ein Meißelhammer, enthaltend eine Halteeinrichtung zum Aufnehmen und Halten eines Werkzeugschafts, ein wenigstens abschnittsweise um die Halteeinrichtung umlaufendes Rückhalteelement sowie eine Staubschutzeinrichtung zum Verhindern des Eindringens von Staub in die Werkzeugaufnahmevorrichtung.

Des Weiteren betrifft die vorliegende Erfindung eine Staubschutzeinrichtung zur Verwendung in einer Werkzeugaufnahmevorrichtung.

Beim Arbeiten mit Werkzeugmaschinen und insbesondere beim Arbeiten mit einem Meißelhammer an mineralischen Werkstoffen (wie z.B. Beton oder Stein) kann Staub entstehen. Durch kleine Öffnungen, wie z.B. einen Spalt zwischen zueinander angrenzenden Gehäuseteilen, kann derartiger Staub in das Innere einer Werkzeugmaschine gelangen. Der Staub, insbesondere mineralischer Staub, kann eine nicht unerhebliche abrasive Wirkung an beweglichen Bauteilen an Komponenten der Werkzeugmaschine haben. Beschädigungen an einzelnen Komponenten der Werkzeugmaschine oder auch der Ausfall der gesamten Werkzeugmaschine kann die Folge des abrasiven Verschleiß sein. Beim Arbeiten mit Werkzeugmaschinen und insbesondere beim Arbeiten mit Meißelhammern entstehen Vibrationen an den Komponenten und Bauteilen der Werkzeugmaschine. Durch diese unvermeidbaren Vibrationen können sich nahezu alle Komponenten der Werkzeugmaschine zueinander bewegen. Eindringender Staub, der zwischen vibrierende Komponenten gelangt, begünstigt und beschleunigt den Verschleiß der Komponenten. Kleine Komponenten, wie z.B. Rückhalteelemente, leiden besonders unter den Vibrationen und der abrasiven Wirkung des eindringenden Staubs.

Staubschutzeinrichtung sowie Werkzeugaufnahmevorrichtung mit einer Staubschutzeinrichtung der eingangs genannten Art sind grundsätzlich aus dem Stand der Technik bekannt bieten jedoch oftmals nur einen unzureichenden Schutz, d.h. Abdichtmöglichkeiten, gegen eindringenden Staub.

Es ist Aufgabe der vorliegenden Erfindung eine Werkzeugaufnahmevorrichtung sowie eine Staubschutzeinrichtung zur Verwendung in einer Werkzeugaufnahmevorrichtung bereitzustellen, durch die das Eindringen von Staub in das Innere einer Werkzeugaufnahmevorrichtung besser verhindert werden kann.

Die Aufgabe wird gelöst durch den Gegenstand des unabhängigen Anspruchs 1 sowie durch den Gegenstand des unabhängigen Anspruchs 7. Weitere vorteilhafte Ausgestaltungen des Gegenstands des unabhängigen Anspruchs 1 finden sich unter anderem in den Unteransprüchen 2 bis 6.

Die Aufgabe wird dabei gelöst durch eine Werkzeugaufnahmevorrichtung für eine Werkzeugmaschine, insbesondere ein Meißelhammer, enthaltend eine Halteeinrichtung zum Aufnehmen und Halten eines Werkzeugschafts, ein wenigstens abschnittsweise um die Halteeinrichtung umlaufendes Rückhalteelement sowie eine Staubschutzeinrichtung zum Verhindern des Eindringens von Staub in die Werkzeugaufnahmevorrichtung.

Erfindungsgemäß enthält die Staubschutzeinrichtung wenigstens ein erstes Staubabstreifelement, wenigstens eine Fixierwulst und wenigstens ein Dichtlippenelement, wobei das Dichtlippenelement in axialer Richtung vor dem Rückhalteelement positioniert ist.

Hierdurch kann auf einfache Art und Weise ein Eindringen von Staub und Schmutz in das Innere der Werkzeugaufnahmevorrichtung verhindert werden.

Das Rückhalteelement kann in Form eines Sprengrings oder dergleichen ausgestaltet sein.

Gemäß einer vorteilhaften Ausführungsform der vorliegenden Erfindung kann es möglich sein, dass ein zweites Staubabstreifelement enthalten ist, wobei das erste und zweite Staubabstreifelement in einem Abstand entlang einer axialen Längsachse zueinander angeordnet sind. Durch das von dem ersten Staubabstreifelement beabstandete zweite Staubabstreifelement kann sichergestellt werden, dass im Falle des Einwirkens von Vibrationen auf die Werkzeugaufnahmevorrichtung immer wenigstens ein Staubabstreifelement an dem Werkzeugschaft anliegt und damit dem Eindringen von Staub in das Innere der Werkzeugaufnahmevorrichtung entgegenwirkt.

Entsprechend einer weiteren vorteilhaften Ausführungsform der vorliegenden Erfindung kann vorgesehen sein, dass die Staubschutzeinrichtung und die Halteeinrichtung so zueinander angeordnet sind, dass zwischen einer Stirnseite des wenigstens einen Staubabstreifelements und einer Stirnseite der Halteeinrichtung ein Abstand entlang einer axialen Längsachse vorgesehen ist. Hierdurch kann auf einfache Art und Weise sichergestellt werden, dass auch im Falle des Einwirkens von Vibrationen auf die Werkzeugaufnahmevorrichtung und bei einem Bewegen des Staubabstreifelements ein Aneinanderstoßen von Halteeinrichtung und Staubabstreifelement verhindert werden kann. Ein Aneinanderstoßen bzw. Berühren von Halteeinrichtung und Staubabstreifelement gilt es zu verhindern, dass ggf. das Staubabstreifelement sich mit der Halteeinrichtung verhakt und das Staubabstreifelement nicht mehr effektiv an dem Werkzeugschaft zur Abdichtung gegen eindringenden Staub anliegt.

Gemäß einer weiteren vorteilhaften Ausführungsform der vorliegenden Erfindung kann es möglich sein, dass das Dichtlippenelement eine in radialer Richtung verjüngende Querschnittsfläche enthält. Hierdurch ist eine hohe Verformbarkeit und Flexibilität des Dichtlippenelements gewährleistet und ein Anliegen an der Halteeinrichtung zur Abdichtung gegen eindringenden Staub sichergestellt.

Entsprechend einer weiteren vorteilhaften Ausführungsform der vorliegenden Erfindung kann vorgesehen sein, dass das Dichtlippenelement eine zu dem Rückhalteelement gerichtete konkave Seitenfläche enthält. Die konkave Form eignet sich optimal zum großflächigen Anliegen bzw. Abdichten des Dichtlippenelements an einem Teilbereich der Oberfläche des Rückhalteelements. Dies ist besonders der Fall, wenn das Rückhalteelement in Form eines Sprengrings mit einer kreisrunden Querschnittsfläche ausgestaltet ist.

Gemäß einer weiteren vorteilhaften Ausführungsform der vorliegenden Erfindung kann es möglich sein, dass die Fixierwulst eine im Wesentlichen trapezförmige Querschnittsfläche enthält. Hierdurch kann auf einfache Art und Weise die Staubschutzeinrichtung relativ leicht auf die Halteeinrichtung in axialer Richtung geschoben werden und gegen ein ungewolltes Abziehen von der Halteeinrichtung gesichert werden.

Darüber hinaus wird die Aufgabe gelöst durch eine Staubschutzeinrichtung zur Verwendung in einer Werkzeugaufnahmevorrichtung gemäß wenigstens einer vorstehend genannten Ausgestaltung.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Figur 1: eine schematisch dargestellte Werkzeugmaschine in Form eines Meißelhammers mit einer erfindungsgemäßen Werkzeugaufnahmevorrichtung und einer erfindungsgemäßen Staubschutzeinrichtung;
- Figur 2: eine Schnittdarstellung der erfindungsgemäßen Werkzeugaufnahmevorrichtung mit der erfindungsgemäßen Staubschutzeinrichtung mit einem in die Werkzeugaufnahmevorrichtung eingeführten Werkzeugschaft;
- Figur 3: eine Schnittdarstellung mit Details der erfindungsgemäßen Staubschutzeinrichtung;
- Figur 4: eine Schnittdarstellung mit weiteren Details eines oberen Anteils der erfindungsgemäßen Staubschutzeinrichtung; und
- Figur 5: eine Schnittdarstellung mit weiteren Details des Dichtlippenelements und des Rückhalteelements.

### Ausführungsbeispiele:

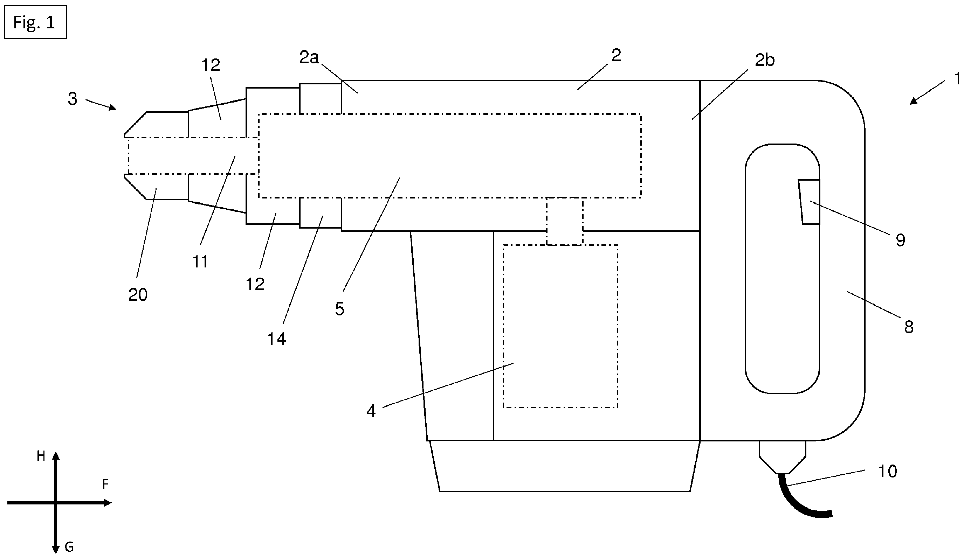

Figur 1 stellt eine Werkzeugmaschine 1 in Ausgestaltung eines Meißelhammers dar. Die Werkzeugmaschine 1 kann alternativ auch in Form eines Bohrhammers, einer Bohrmaschine oder eines Kombihammers ausgestaltet sein. Bei einem Kombihammer handelt es sich um eine Kombination von Bohr- und Meißelhammer. Darüber hinaus kann es sich bei der Werkzeugmaschine 1 auch um eine Säge, insbesondere Säbelsäge handeln.

Die in Figur 1 dargestellte Werkzeugmaschine 1 enthält im Wesentlichen ein Gehäuse 2, eine Werkzeugaufnahmevorrichtung 3, einen Antrieb 4, ein Schlagwerk 5 sowie eine Halteeinrichtung 11. Der Antrieb 4, das Schlagwerk 5 und die Halteeinrichtung 11 sind im Inneren des Gehäuses 2 der Werkzeugmaschine 1 positioniert. Der Antrieb 4 ist in Form eines Elektromotors ausgestaltet und im Inneren des Gehäuses 2 so mit dem Schlagwerk 5 und der Halteeinrichtung 11 verbunden, dass ein durch den Antrieb 4 und das Schlagwerk 5 erzeugte Schlagimpuls auf ein in der Halteeinrichtung 11 befindliches Werkzeug 7 übertragen wird.

Das Gehäuse 2 weist ein vorderes Ende 2a und ein hinteres Ende 2b auf. An dem hinteren Ende 2b des Gehäuses 2 ist ein Handgriff 8 mit einem Aktivierungsschalter 9 positioniert. Mit dem Handgriff 8 kann die Werkzeugmaschine 1 von einem Anwender gehalten und geführt werden. Der Aktivierungsschalter 9 dient zum Betreiben bzw. Aktivieren der Werkzeugmaschine 1 und insbesondere des Antriebs 4 sowie des Schlagwerks 5. Der Anwender ist in den Figuren nicht gezeigt.

Des Weiteren ist an dem hinteren Ende 2b des Gehäuses 2 der Werkzeugmaschine 1 ein Netzkabelanschluss 10. Das zu dem Netzkabelanschluss 10 gehörende Netzkabel ist in Figur 1 lediglich angedeutet. Durch den Netzkabelanschluss 10 kann die Werkzeugmaschine 1 mit elektrischer Energie aus einem Netzwerk versorgt werden. Alternativ kann die Werkzeugmaschine 1 auch durch einen mit der Werkzeugmaschine 1 verbunden Akkumulator mit elektrischer Energie versorgt werden. Der Akkumulator ist in den Figuren nicht gezeigt.

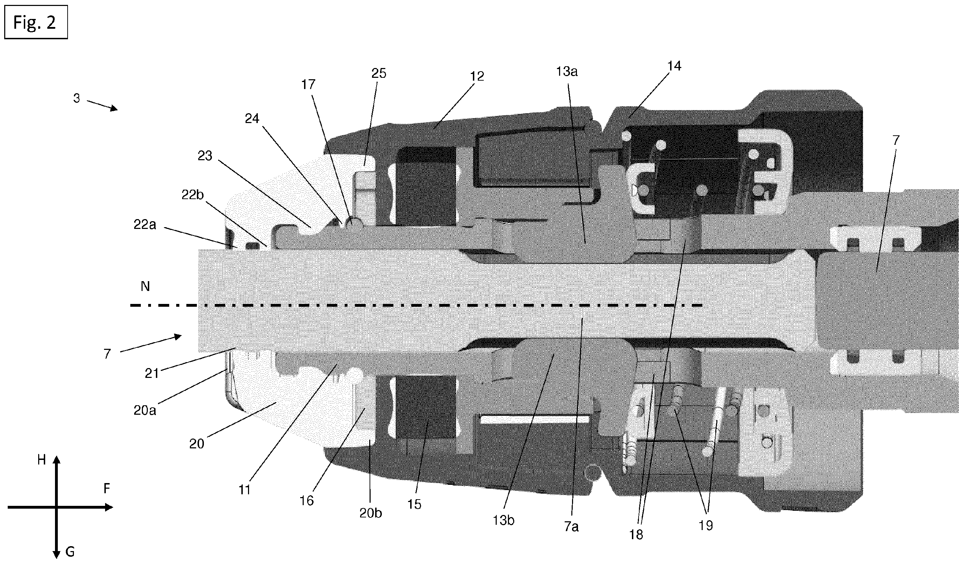

Die Werkzeugaufnahmevorrichtung 3 ist an dem vorderen Ende 2a des Gehäuses 2 der Werkzeugmaschine 1 positioniert. Die Werkzeugaufnahmevorrichtung 3 dient zum Aufnehmen und Halten eines Werkzeugs 7. In der vorliegenden Ausgestaltung der Werkzeugmaschine 1 und der Werkzeugaufnahmevorrichtung 3 ist das Werkzeug 7 in Form eines Meißels ausgestaltet. In Figur 2 ist ein hinteres Ende des als Meißels ausgestalteten Werkzeugs 7 gezeigt. Das hintere Ende des Meißels 7a kann als Schaft, Meißelschaft oder Werkzeugschaft bezeichnet werden.

Die Werkzeugaufnahmevorrichtung enthält im Wesentlichen eine Halteeinrichtung 11, eine Werkzeugkappe 12, zwei Verriegelungsklinken 13a, 13b, eine Löseeinrichtung 14, Dämpfungselemente 15, ein Haltering 16, ein Rückhalteelement 17 sowie eine Staubschutzeinrichtung 20.

Wie in Figur 1 und 2 angedeutet ist die Halteeinrichtung 11 im Wesentlichen als zylindrisches Rohr ausgestaltet, in welches der Werkzeugschaft 7a eingeführt werden kann. Die als zylindrisches Rohr ausgestaltete Halteeinrichtung 11 weist des Weiteren Öffnungen 18 auf, in den die Verriegelungsklinken 13a, 13b positioniert sind. Die Verriegelungsklinken 13a, 13b können auch als Haltebacken bezeichnet werden. Die Verriegelungsklinken 13a, 13b können in einer Halteposition oder Freigabeposition durch die Löseeinrichtung 14 eingestellt werden. Mit Hilfe der durch die Öffnungen 18 der Halteeinrichtung 11 hindurchragenden Verriegelungsklinken 13a, 13b kann der Werkzeugschaft 7a in der Halteeinrichtung 11 gegen ein axiales Herausfallen gesichert werden, wenn sich die Verriegelungsklinken 13a, 13b in der Halteposition befinden (vgl. Figur 2). Die Verriegelungsklinken 13a, 13b liegen dabei nicht an dem Werkzeugschaft 7a an und verklemmen den Werkzeugschaft 7a nicht in der Halteeinrichtung 11. Das Werkzeug 7 kann sich in der Halteposition der Verriegelungsklinken 13a, 13b axial in der Halteeinrichtung 11 bewegen. Wie in Figur 2 gezeigt liegen in der Halteposition die Verriegelungsklinken 13a, 13b nahezu an dem Werkzeugschaft 7a an.

Die Löseeinrichtung 14 ist, wie in Figur 2 angedeutet, als Hülse ausgestaltet und um die Verriegelungsklinken 13a, 13b positioniert. Die als Hülse ausgestaltete Löseeinrichtung 14 kann in Richtung F gegen die Kraft einer Feder 19 von einer ersten Position in eine zweite Position bewegt werden. In der ersten Position bewirkt die Löseeinrichtung 14, dass die Verriegelungsklinken 13a, 13b nahezu an dem in der Halteeinrichtung 11 befindlichen Werkzeugschaft 7a anliegen und das Werkzeug 7 so in der Halteeinrichtung 11 halten. Die Feder 19 drück gegen die Richtung F die Löseeinrichtung 14 n der ersten Position und somit die Verriegelungsklinken 13a, 13b in Richtung des Werkzeugschafts 7a. Wenn die Löseeinrichtung 14 gegen die Federkraft der Feder 19 in Richtung F gedrückt wird, wird keine Kraft mehr von der Löseeinrichtung 14 auf die Verriegelungsklinken 13a, 13b ausgeübt, sodass die Verriegelungsklinken 13a, 13b radial beweglich sind. Mit anderen Worten: die Verriegelungsklinken 13a, 13b können, wenn sich die Löseeinrichtung 14 in der zweiten Position befindet, von der Halteposition in die Freigabeposition bewegt werden. In der Freigabeposition kann der Werkzeugschaft 7a gegen die Richtung F aus der Halteeinrichtung 11 entnommen werden.

Die Werkzeugkappe 12 ist ebenfalls als Hülse ausgestaltet und in Richtung F vor der Löseeinrichtung 14 positioniert. Die Werkzeugkappe 12 ist dabei als Halterung vorgesehen und dient zum Halten der Werkzeugaufnahmevorrichtung 3, wenn beispielsweise die Löseeinrichtung 14 in Richtung F bewegt wird. Darüber hinaus verhindert die Werkzeugkappe 12 auch, dass Staub oder Schmutz in das Innere der Werkzeugaufnahmevorrichtung 3 eindringen kann.

Wie in Figur 2 angedeutet ist das Dämpfungselemente 15 im Wesentlichen ringförmig ausgestaltet und zwischen der Werkzeugkappe 12 sowie der Halteeinrichtung 11 unter Vorspannung positioniert. Das Dämpfungselemente 15 besteht aus einem elastischen Werkstoff, z.B. ein Elastomer, und dient unter anderem zum Dämpfen von Vibrationen in der Werkzeugaufnahmevorrichtung 3. Da das Dämpfungselement 15 unter Vorspannung zwischen der Werkzeugkappe 12 und der Halteeinrichtung 11 positioniert ist, übt das Dämpfungselement 15 des Weiteren eine Kraft bzw. ein Druck in axialer Richtung auf benachbarte Bauteile aus. Hierdurch wird eine Spannung bzw. Druck in der Werkzeugaufnahmevorrichtung 3 gegeben, sodass die einzelnen Komponenten bzw. Bauteile der Werkzeugaufnahmevorrichtung 3 aneinandergepasst sind. Wie nachfolgend beschrieben, wirkt das Dämpfungselement 15 mit dem Rückhalteelement 17 zusammen, um eine Vorspannung in die Werkzeugaufnahmevorrichtung 3 zu bringen.

Weiterhin dient das Dämpfungselemente 15 um Kraftspitzen bzw. Impulse im Falle eines Leerschlags während der Verwendung der als Meißelhammer ausgestalteten Werkzeugmaschine 1 abzudämpfen. Ein Leerschlag findet statt, wenn das Werkzeug (in Form eines Meißels) nicht auf einen Werkstoff (z.B. Beton), sondern in die Luft schlägt. In diesem Falle wird die Schlagenergie auf unerwünschter Weise auf das Gehäuse 2 der Werkzeugmaschine 1 und schließlich auch auf den Anwender der Werkzeugmaschine 1 übertragen.

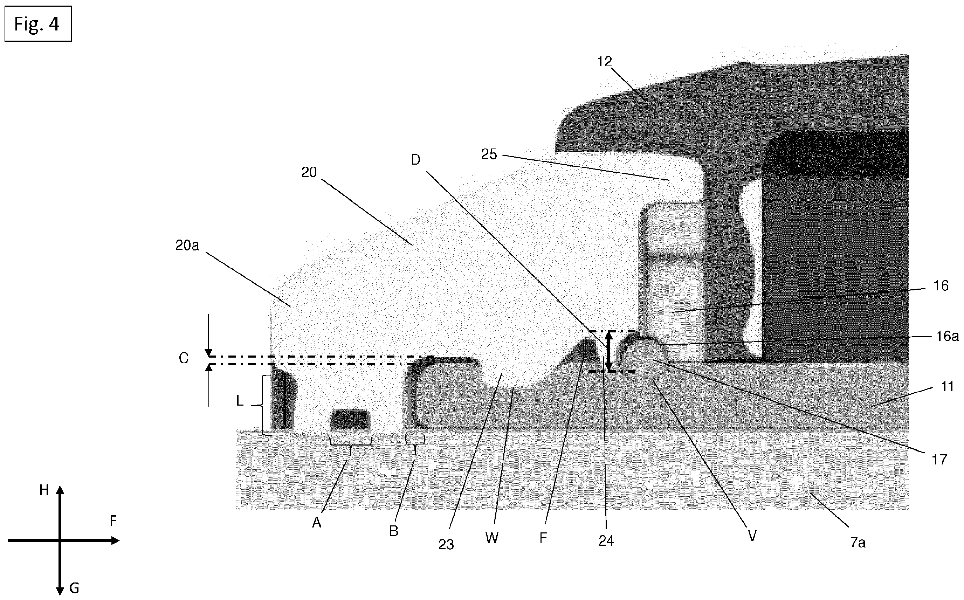

Des Weiteren ist, wie in Figur 2 gezeigt, der Haltering 16 in Richtung F vor der Werkzeugkappe 12 und um die Halteeinrichtung 11 positioniert. Der Halteringl6 ist im Wesentlichen ringförmig ausgestaltet und dient im Zusammenspiel mit dem Rückhalteelement 17 zum Fixieren der Werkzeugkappe 12 auf der Halteeinrichtung 11. Wie in Figur 4 gezeigt, weist der Haltering 16 eine sektorförmige Aussparung 16a auf, wodurch eine konkave Außenfläche entsteht. Die Form und Position dieser Aussparung 16a ist dabei so gewählt, dass das Rückhalteelement 17 an dem bzw. in den Haltering 16 eingepasst ist.

Das Rückhalteelement 17 ist, wie in Figur 2 gezeigt, als Sprengring ausgestaltet und in Richtung F vor dem Haltering 16 positioniert. Das als Sprengring ausgestaltete Rückhalteelement 17 dient zum Halten bzw. Fixieren des Halterings 16 sowie der Werkzeugkappe 12 auf der Halteeinrichtung 11. Die Halteeinrichtung 11 weist an der Höhe bzw. an der Stelle des Sprengrings 17 eine entsprechende Vertiefung V in Form einer Nut auf. Der Sprengring 17 liegt in der Nut V.

Die Staubschutzeinrichtung 20 dient zum Verhindern des Eindringens von Staub in die Werkzeugaufnahmevorrichtung 3 und ist im Wesentlichen als kegelstumpfförmige Kappe mit einer zentralen Durchbohrung 21 ausgestaltet. Die Staubschutzeinrichtung 20 besteht dabei aus einem elastischen Material, das auch als Elastomer bezeichnet werden kann. Darüber hinaus enthält die Staubschutzeinrichtung 20 im Wesentlichen ein vorderes Ende 20a, ein hinteres Ende 20b, ein erstes Staubabstreifelement 22a, ein zweites Staubabstreifelement 22b, eine Fixierwulst 23 sowie ein Dichtlippenelement 24.

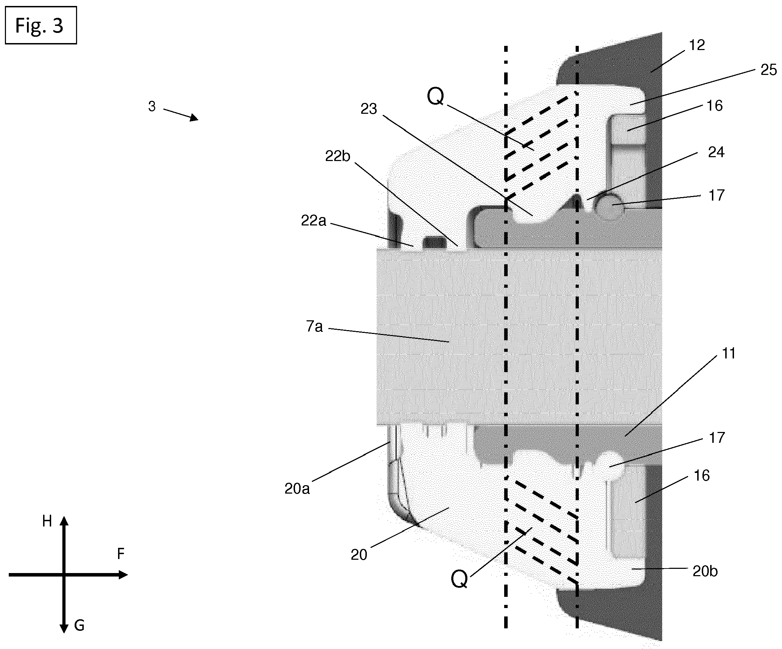

Wie insbesondere in Figur 3 und 4 gezeigt, ist das erste Staubabstreifelement 22a im Wesentlichen an dem vorderen Ende 20a positioniert. Sowohl das erste als auch das zweite Staubabstreifelement 22a, 22b erstreckt sich in radialer Richtung. Die Länge L des ersten und zweiten Staubabstreifelements 22a, 22b ist dabei so gewählt, dass das erste und zweite Staubabstreifelement 22a, 22b an der Oberfläche eines Werkzeugschafts 7a anliegen, wenn ein Werkzeug 7 in die Halteeinrichtung 11 eingeführt ist. Das erste und zweite Staubabstreifelement 22a, 22b sind in einem Abstand A entlang der axialen Längsachse N zueinander angeordnet. Der Abstand A entspricht dabei im Wesentlichen der Hälfe der Länge L. Der Abstand A zwischen dem ersten und zweiten Staubabstreifelement 22a, 22b dient dazu, dass im Falle von Vibrationen, die auf die Staubschutzeinrichtung 20 einwirken, stets wenigstens ein Staubabstreifelement 22a, 22b an dem Werkzeugschaft 7a anliegt und damit gegen eindringenden Staub abdichtet. Die Staubabstreifelemente 22a, 22b wirken auf den Werkzeugschaft 7a und dienen generell zum Verhindern des Eindringens von Staub in das Innere der Werkzeugaufnahmevorrichtung 3.

Die Staubschutzeinrichtung 20 und die Halteeinrichtung 11 sind so zueinander angeordnet, dass zwischen einer äußeren Stirnseite des zweiten Staubabstreifelements 22b und einer Stirnseite der Halteeinrichtung ein Abstand B entlang der axialen Längsachse N vorgesehen ist. Der Abstand B entspricht dabei im Wesentlichen der Hälfte des Abstands A. Der Abstand B dient dazu, dass sich das zweite Staubabstreifelement 22b relativ frei bewegen kann und nicht an die Stirnseite der Halteeinrichtung 11 stößt, wenn Vibrationen auf die Werkzeugaufnahmevorrichtung 3 und das zweite Staubabstreifelement 22b einwirken. Neben dem ersten und zweiten Staubabstreifelement 22a, 22b kann auch ein weiteres Staubabstreifelement oder mehrere Staubabstreifelemente vorgesehen sein. Darüber hinaus ist die Staubschutzeinrichtung 20 und die Halteeinrichtung 11 sind so zueinander angeordnet, dass zwischen einer inneren Mantelfläche der Staubschutzeinrichtung 20 und der Oberfläche der Halteeinrichtung 11 ein Abstand C entsteht.

Die Fixierwulst 23 ist zwischen den Staubabstreifelementen 22a, 22b und dem Dichtlippenelement 24 positioniert und erstreckt sich in radialer Richtung. Die Fixierwulst 23 enthält eine im Wesentlichen trapezförmige Querschnittsfläche mit wenigstens einer schräg ansteigenden Stirnseitenfläche. Die schräg ansteigende Stirnseitenfläche ist dabei in Richtung F zu dem Dichtlippenelement 24 gerichtet. Die radiale Länge der Fixierwulst 23 ist dabei so gewählt, dass die Fixierwulst 23 an der Halteeinrichtung 11 anliegt. Die Fixierwulst 23 dient ebenfalls zum Verhindern des Eindringens von Staub in das Innere der Werkzeugaufnahmevorrichtung 3. Die Fixierwulst 23 ist dabei in radialer Richtung kürzer als das erste und/oder zweite Staubabstreifelement 22a, 22b ausgestaltet.

Die Halteeinrichtung 11 weist auf der Höhe bzw. an der Stelle der Fixierwulst 23 eine ringförmige Vertiefung W aufweist, in die ein freies Ende der Fixierwulst 23 eingeführt wird. Die ringförmige Vertiefung W kann auch als Nut bezeichnet werden. Durch das Einführen des freien Endes der Fixierwulst 23 in die ringförmige Vertiefung W ist eine noch bessere Abdichtung gegen das Eindringen von Staub in das Innere der Werkzeugaufnahmevorrichtung 3 gegeben, da das freie Ende der Fixierwulst 23 in der ringförmigen Vertiefung W eine formschlüssige Verbindung mit der Halteeinrichtung 11 einnimmt. Darüber hinaus sichert das Einführen des freien Endes der Fixierwulst 23 in die ringförmige Vertiefung W das feste Anbringen der Staubschutzeinrichtung 20 auf der Halteeinrichtung und verhindert gleichzeitig ein zu leichtes Abziehen (gegen die Richtung F) Staubschutzeinrichtung 20 von der Halteeinrichtung 11. Um die Staubschutzeinrichtung 20 einfacher in Richtung F auf die Halteeinrichtung 11 aufschieben zu können, weist die Fixierwulst 23 die trapezförmige Querschnittsfläche mit der schräg ansteigenden Stirnseitenfläche auf. Um die Anbringung der Staubschutzeinrichtung 20 auf der Halteeinrichtung 11 weiter zu verbessern, ist die Staubschutzeinrichtung 20 in dem radiale Bereich Q um die Fixierwulst herum zwischen der Halteeinrichtung 11 sowie der Werkzeugkappe 12 vorgespannt. Durch die Vorspannung ist das elastische Material der Staubschutzeinrichtung 20 gestaucht und somit die Dichte des Material an dieser Stelle erhöht. Mit anderen Worten: das Material der Staubschutzeinrichtung 20 ist in dem Bereich Q steifer als an den Stellen außerhalb des Bereichs Q.

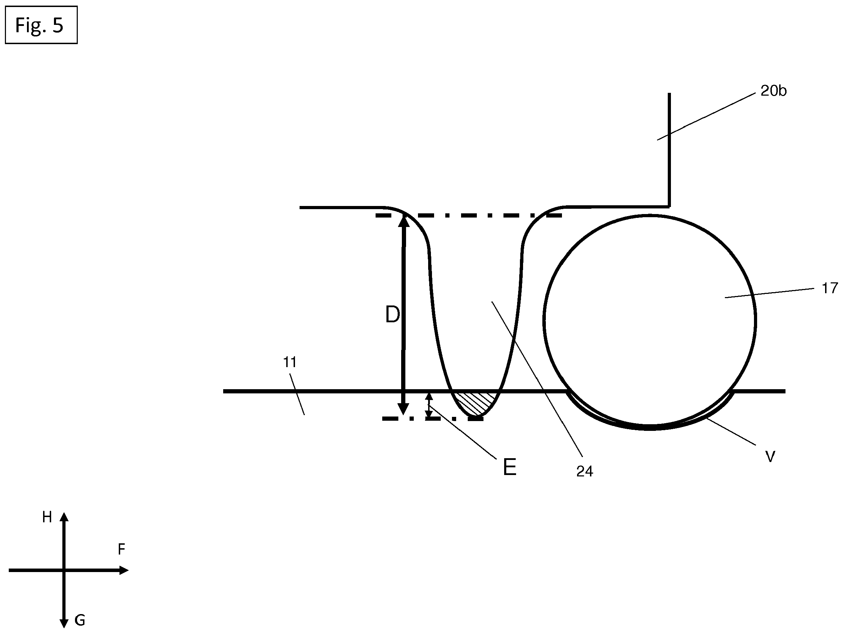

Das Dichtlippenelement 24 in axialer Richtung F vor dem als Sprengring ausgestalteten Rückhalteelement 14 positioniert ist und im Wesentlichen mit einer dreieckigen Querschnittsfläche ausgestaltet. Das Dichtlippenelement 24 ist damit zwischen der Fixierwulst 23 und dem Rückhaltelement 17 positioniert. Das als Sprengring ausgestaltete Rückhalteelement 17 weist dabei eine im Wesentlichen kreisrunde Querschnittsfläche auf (vgl. Figur 4). Das Dichtlippenelement 24 enthält eine in radialer Richtung verjüngende Querschnittsfläche und liegt mit dem freien Ende vorgespannt an der Oberfläche der Halteeinrichtung 11 an (vgl. Figur 5). Durch die spezifische Länge D des Dichtlippenelements 24 ist das Dichtlippenelement 24 leicht in Richtung F gebogen. Das Dichtlippenelement 24 ist damit in radialer Erstreckung (d.h. die Länge D) kürzer als die Fixierwulst 23 oder die Staubabstreifelemente 22a, 22b. Des Weiteren ist, wie in Figur 5 gezeigt, die Länge D des Dichtlippenelements 24 so gewählt, dass ein Teilbereich E der gesamten Länge D des Dichtlippenelements 24 auf der Oberfläche der Halteeinrichtung 11 gedrückt ist. Der auf die Oberfläche der Halteeinrichtung 11 gedrückte bzw. komprimierte Teilbereich E beträgt dabei 3/10 (in Worten: drei Zehntel) der gesamten Länge D des Dichtlippenelements 24. Bei einer Gesamtlänge D von 10 mm ist somit der Teilbereich E ungefähr 3 mm lang. Gemäß einer alternativen Ausgestaltung kann der Teilbereich E zwischen 1/10 und 5/10 der gesamten Länge D des Dichtlippenelements 24 betragen. Im Gegensatz zu den Staubabstreifelementen 22a, 22b wirkt das Dichtlippenelement 24 an der Halteeinrichtung 11.

Die Position des Dichtlippenelements 24 und der Fixierwulst 23 an der Staubschutzeinrichtung 20 sind so gewählt, dass ein ringförmiger Bereich F zwischen dem Dichtlippenelement 24 und der Fixierwulst 23 frei bleibt. Wie in Figur 4 gezeigt, weist der ringförmige Bereich F eine im Wesentlichen dreieckförmige Querschnittsfläche auf. Der freie Bereich F dient dazu, dass sich das Dichtlippenelements 24 in radialer Richtung bewegen kann ohne dabei an die Fixierwulst 23 zu stoßen.

Darüber hinaus kann das Dichtlippenelement 24 eine zu dem Rückhalteelement 17 gerichtete konkave Seitenfläche aufweisen. Durch die konkave Seitenfläche kann sich das Dichtlippenelement 24 an die Außenwand des Sprengrings 17 großflächig anlegen, wenn das Dichtlippenelement 24 durch Vibrationen in Bewegung gerät. Durch das großflächige Anlegen der konkaven Seitenfläche des Dichtlippenelements 24 an der Außenwand des Sprengrings 17 wird der Sprengring 17 optimal gegen in die Werkzeugaufnahmevorrichtung 3 eindringenden Staub abgedichtet.

Die Staubschutzeinrichtung 20 weist an dem hinteren Ende 20b einem Überstand 25 auf. der Überstand 25 kann auch als Finger bezeichnet werden. Wie in Figur 4 gezeigt, erstreckt sich der Überstand 25 in axialer Richtung F und ist zwischen der Oberfläche des Halterings 16 und einem Überstand 25 der Werkzeugkappe 12 positioniert. Durch den Überstand 25 der Staubschutzeinrichtung 20 und den Überstand der Werkzeugkappe 12 sowie durch die Positionierung der Fixierwulst 23 in der ringförmigen Vertiefung W an der Halteeinrichtung 11 ist die Staubschutzeinrichtung 20 relativ fest mit den anderen Komponenten (insbesondere der Halteeinrichtung und der Werkzeugkappe) der Werkzeugaufnahmevorrichtung 3 verbunden und gegen ein unbeabsichtigtes Abfallen von der Werkzeugaufnahmevorrichtung 3 gesichert.

### Bezugszeichenliste

- 1: Werkzeugmaschine
- 2: Gehäuse
- 2a: vorderes Ende des Gehäuses
- 2b: hinteres Ende des Gehäuses
- 3: Werkzeugaufnahmevorrichtung
- 4: Antrieb
- 5: Schlagwerk
- 7: Werkzeug
- 7a: hinteres Ende des Werkzeugs; Werkzeugschaft
- 8: Handgriff
- 9: Aktivierungsschalter
- 10: Netzkabelanschluss
- 11: Halteeinrichtung
- 12: Werkzeugkappe
- 13a: Verriegelungsklinke
- 13b: Verriegelungsklinke
- 14: Löseeinrichtung
- 15: Dämpfungselement
- 16: Haltering
- 16a: sektorförmige Aussparung am Haltering
- 17: Rückhalteelement
- 18: Öffnungen an Halteeinrichtung
- 19: Feder
- 20: Staubschutzeinrichtung
- 20a: vorderes Ende der Staubschutzeinrichtung
- 20b: hinteres Ende der Staubschutzeinrichtung
- 21: zentrale Durchbohrung an der Staubschutzeinrichtung
- 22a: erstes Staubabstreifelement
- 22b: zweites Staubabstreifelement
- 23: Fixierwulst
- 24: Dichtlippenelement
- 25: Überstand
- A: Abstand zwischen erste und zweite Staubabstreifelement
- B: zwischen Stirnseite des zweiten Staubabstreifelements und Stirnseite der Halteeinrichtung
- C: Abstand zwischen inneren Mantelfläche der Staubschutzeinrichtung und Oberfläche der Halteeinrichtung
- D: Länge des Dichtlippenelements
- E: Teilbereich der gesamten Länge des Dichtlippenelements
- F: axiale Richtung
- G: radiale Richtung
- H: radiale Richtung
- L: Länge des ersten und zweiten Staubabstreifelements
- N: axiale Längsachse
- Q: elastischer Bereich der Staubschutzeinrichtung
- V: Vertiefung an Halteeinrichtung für Rückhalteelement
- W: Vertiefung an Halteeinrichtung für Fixierwulst

## Patentansprüche

1. Werkzeugaufnahmevorrichtung (3) für eine Werkzeugmaschine (1), insbesondere ein Meißelhammer, enthaltend eine Halteeinrichtung (11) zum Aufnehmen und Halten eines Werkzeugschafts (7a), ein wenigstens abschnittsweise um die Halteeinrichtung (11) umlaufendes Rückhalteelement (17) sowie eine Staubschutzeinrichtung (20) zum Verhindern des Eindringens von Staub in die Werkzeugaufnahmevorrichtung (3),
**dadurch gekennzeichnet, dass** die Staubschutzeinrichtung (20) wenigstens ein erstes Staubabstreifelement (22a), wenigstens eine Fixierwulst (23) und wenigstens ein Dichtlippenelement (24) enthält, wobei das Dichtlippenelement (24) in axialer Richtung (F) vor dem Rückhalteelement (17) positioniert ist.

2. Werkzeugaufnahmevorrichtung (3) nach Anspruch 1,
**dadurch gekennzeichnet, dass** ein zweites Staubabstreifelement (22b) enthalten ist, wobei das erste und zweite Staubabstreifelement (22a, 22b) in einem Abstand (A) entlang einer axialen Längsachse (N) zueinander angeordnet sind.

3. Werkzeugaufnahmevorrichtung (3) nach Anspruch 1 oder 2,
**dadurch gekennzeichnet, dass** die Staubschutzeinrichtung (20) und die Halteeinrichtung (11) so zueinander angeordnet sind, dass zwischen einer Stirnseite des wenigstens einen Staubabstreifelements (22a, 22b) und einer Stirnseite der Halteeinrichtung (11) ein Abstand (B) entlang einer axialen Längsachse (N) vorgesehen ist.

4. Werkzeugaufnahmevorrichtung (3) nach wenigstens einem der Ansprüche 1 bis 3,
**dadurch gekennzeichnet, dass** das Dichtlippenelement (24) eine in radialer Richtung (G) verjüngende Querschnittsfläche enthält.

5. Werkzeugaufnahmevorrichtung (3) nach wenigstens einem der Ansprüche 1 bis 4,
**dadurch gekennzeichnet, dass** das Dichtlippenelement (24) eine zu dem Rückhalteelement (17) gerichtete konkave Seitenfläche enthält.

6. Werkzeugaufnahmevorrichtung (3) nach wenigstens einem der Ansprüche 1 bis 5,
**dadurch gekennzeichnet, dass** die Fixierwulst (23) eine im Wesentlichen trapezförmige Querschnittsfläche enthält.

7. Staubschutzeinrichtung (20) zur Verwendung in einer Werkzeugaufnahmevorrichtung (3) nach wenigstens einem der Ansprüche 1 bis 7.
